# FASCICULE DE BREVET EUROPEEN

(11) **EP 0 778 480 B1**
(45) Date de publication et mention de la délivrance du brevet: **14.04.2004**
(21) Numéro de dépôt: 96402641.3
(22) Date de dépôt: 05.12.1996
(51) Int. Cl.: G02B 6/36

(54) **Joint optique tournant à transmission bidirectionnelle d'informations**
Drehbare optische Verbindung für bidirektionale Informationsübertragung
Bidirectional informations transmission optical rotary joint

(30) Priorité: 07.12.1995 FR 9514474
(43) Date de publication de la demande: 11.06.1997
(73) Titulaire: European Aeronautic Defence and Space Company - EADS France, 75016 Paris (FR)
(72) Inventeur: Debove, Nicolas, 78000 Versailles (FR); Boue, Francis, 18000 Bourges (FR); Lacaisse, Gilles, 18000 Bourges (FR)
(74) Mandataire: Poulin, Gérard

(56) Documents cités:
- EP-A- 0 035 054
- GB-A- 2 185 590
- US-A- 5 297 225

## Description

### Domaine technique

L'invention concerne un procédé de transmission bidirectionnelle d'informations sur une large bande de fréquences entre deux tronçons de fibre optique monomode animés d'un mouvement de rotation relative à grande vitesse.

Le procédé selon l'invention peut être utilisé dans tous les cas où des joints optiques tournants existants sont utilisés, dès lors que la place disponible est suffisamment importante. Ainsi, le procédé selon l'invention peut notamment être utilisé sur un banc d'essai permettant d'effectuer le déroulement rapide d'une fibre optique bobinée, afin de tester au sol l'efficacité de la transmission bidirectionnelle des informations entre un engin fibroguidé et sa base de lancement.

### Etat de la technique

Il existe un certain nombre de joints optiques tournants, permettant de transmettre des informations entre deux tronçons de fibre optique aptes à être animés d'un mouvement de rotation relative.

Parmi les joints optiques existants, certains ne permettent qu'une transmission unidirectionnelle d'informations.

On trouve notamment dans cette première catégorie les joints optiques assurant un couplage entre une fibre optique monomode à petit coeur et une fibre optique multimode à grand coeur. Les deux fibres optiques étant placées bout à bout en vis-à-vis l'une de l'autre, la transmission des informations n'est possible que de la fibre optique à petit coeur vers la fibre optique à grand coeur. Ce type de joints se distingue par ailleurs par une bande passante moyenne, généralement d'environ 50 MHz, due à l'utilisation d'une fibre optique multimode. En effet, si les fibres optiques monomodes présentent une bande passante très élevée (par exemple, environ 20 GHz.km), les fibres optiques multimodes ne présentent qu'une bande passante moyenne.

Parmi les joints optiques tournants n'assurant qu'une transmission unidirectionnelle des informations, on trouve également les joints optiques utilisant une photodiode à grande surface. Le principe de ces joints optiques est comparable au précédent, la fibre optique multimodes à grand coeur étant remplacée par une photodiode à grande surface. Les informations ne peuvent être transmises que de la fibre optique vers la photodiode. Ce type de joints optiques se caractérise par ailleurs par une bande passante faible, généralement d'environ 100 kHz.

Les joints optiques tournants existants qui permettent d'assurer une transmission bidirectionnelle d'informations entre les deux tronçons de fibre optique utilisent généralement un couplage réalisé en optique libre, comme dans la demande de brevet GB 2185590, ou au moyen de deux lentilles placées respectivement en vis-à-vis des extrémités des deux fibres optiques comme dans la demande EP0035054. Ce type de joints optiques se caractérise par une vitesse de rotation relative limitée entre les deux fibres. Ainsi, la vitesse de rotation relative maximale est d'environ 1000 tr/min dans le cas de fibres optiques multimode et d'environ 100 tr/min dans le cas de fibres optiques monomodes. De plus, la mise en oeuvre de ce type de joints optiques est difficile car elle nécessite la réalisation d'épissures.

Cette analyse des joints optiques tournants existants fait apparaître qu'il n'existe pas à l'heure actuelle de joints assurant une transmission bidirectionnelle des informations sur une bande passante très importante (par exemple, environ 25 GHz), autorisant un mouvement de rotation relative très rapide (par exemple, environ 7000 tr/min à environ 8000 tr/min) et ne présentant pas de difficulté de mise en oeuvre particulière.

### Exposé de l'invention

L'invention a précisément pour objet un procédé d'un type nouveau, assurant une transmission bidirectionnelle des informations sur une bande passante très importante, tout en autorisant un mouvement de rotation relative à vitesse élevée, sans difficulté de mise en oeuvre particulière, sans risque de rupture de fibre et sans introduire d'atténuation optique inacceptable.

Conformément à l'invention, ce résultat est obtenu au moyen d'un procédé de transmission bidirectionnelle d'informations entre deux tronçons de fibre optique monomode ayant un mouvement de rotation relative, comprenant les étapes suivantes :
a) déterminer le nombre maximal de tours N non nul de mouvement de rotation relative entre les deux tronçons de fibre optique monomode,
b) relier directement lesdits tronçons de fibre optique monomode par un joint optique tournant comprenant une longueur de fibre optique monomode, la longueur, exprimée en mètres, étant au moins égale à N/150,
c) initier la rotation des deux tronçons de fibre optique monomode et transmettre les informations entre lesdits tronçons.

En réalisant le joint optique tournant sous la forme d'une longueur de fibre optique monomode qui dépend du nombre maximal de tours à effectuer, on autorise une transmission bidirectionnelle des informations sur une grande bande passante. Ainsi, en utilisant 100 m de fibre optique monomode, on obtient une bande passante d'environ 25 GHz, très supérieuré à celle de la plupart des joints optiques tournants connus cités précédemment.

De plus, la mise en oeuvre du joint optique tournant conforme à l'invention est particulièrement simple puisque le joint est constitué directement par un tronçon de la fibre optique monomode servant à la transmission.

En outre, un tel joint autorise une vitesse de rotation relative élevée entre les deux tronçons reliés par la longueur de fibre optique monomode qui forme le joint optique tournant.

La longueur minimale de la fibre optique monomode formant le joint optique tournant est déterminée afin d'éviter tout risque de rupture de la fibre lors du fonctionnement.

Le joint optique tournant conforme à l'invention permet en outre de conserver les paramètres de transmission. En particulier, il présente une atténuation optique inférieure à 1 décibel dans le cas le plus défavorable.

Dans une forme de réalisation préférentielle de l'invention, la longueur de fibre optique monomode formant le joint optique tournant est placée sous tension entre les deux tronçons de fibre optique qu'elle relie, afin d'éviter qu'elle n'entre.en contact avec le sol où tout autre obstacle.

De plus, les axes de ces deux tronçons sont soit sensiblement confondus lorsque la longueur de fibre optique monomode est inférieure à environ 100 m, soit sensiblement parallèles et légèrement décalés l'un par rapport à l'autre lorsque la longueur de fibre optique monomode est au moins égale à environ 100 m. Dans ce dernier cas, le décalage entre les axes a pour but de faire entrer la longueur de fibre formant le joint optique tournant en vibration, pour faciliter la répartition de la torsion sur toute cette longueur de fibre optique monomode.

Dans une application préférentielle de l'invention, le joint optique tournant est placé dans un banc d'essai assurant le déroulement rapide d'une fibre optique bobinée, entre un tronçon de fibre enroulé sur un tambour apte à être animé d'un mouvement de rotation rapide autour de son axe et un tronçon de fibre relié à un dispositif statique émetteur-récepteur optique.

### Brève description des dessins

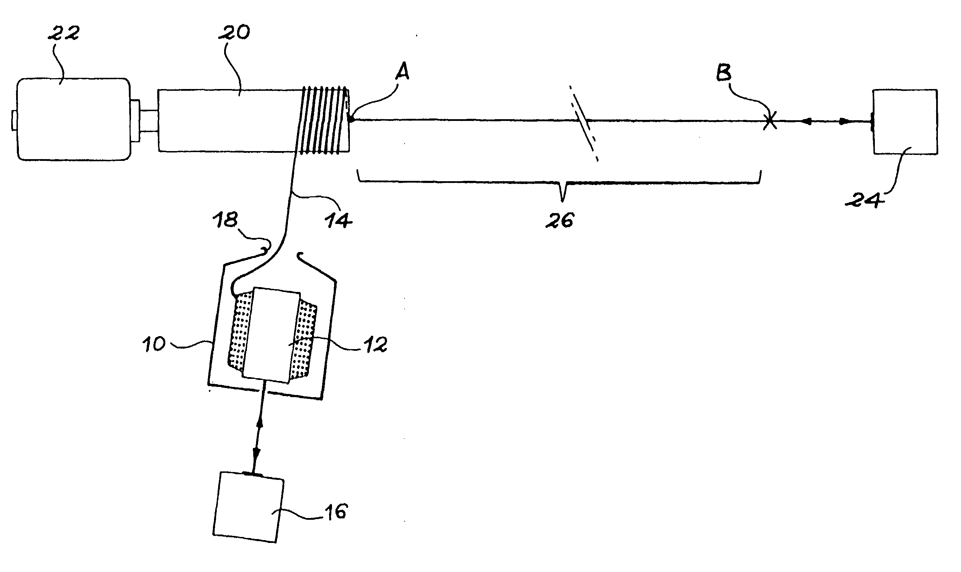

On décrira à présent, à titre d'exemple non limitatif, une forme de réalisation préférentielle de l'invention en se référant au dessin annexé dans lequel la figure unique représente un joint optique tournant conforme à l'invention, intégré dans un banc d'essai assurant le déroulement rapide d'une fibre optique bobinée.

### Exposé détaillé d'une forme de réalisation préférentielle.

Sur la figure unique, on a représenté de façon très schématique un banc d'essai permettant d'effectuer le déroulement rapide d'une fibre optique monomode bobinée. Un tel banc d'essai peut notamment être utilisé pour étudier au sol le comportement d'une fibre optique qui se déroule d'une bobine embarquée sur un engin fibroguidé tel qu'un missile ou un drone. En particulier, il est possible d'étudier de cette façon l'effet du déroulement de la fibre sur la transmission bidirectionnelle des informations.

Sur un tel banc d'essai, un bâti fixe (non représenté) supporte de façon sensiblement stationnaire une bobine 12 sur laquelle est enroulée la fibre optique monomode 14 dont on désire tester le comportement lors de son déroulement. La bobine 12 ainsi que la fibre optique 14 qu'elle supporte sont de préférence identiques à celles qui sont utilisées sur l'engin. Comme on l'a déjà observé, l'utilisation d'une fibre optique 14 monomode autorise une transmission d'informations bidirectionnelle dans une bande passante très large d'environ 20 GHz.km, lorsque la fibre n'est pas vrillée.

A titre d'illustration nullement limitative, la fibre optique monomode 14 peut présenter un diamètre d'environ 250 µm.

Une extrémité fixe de la fibre optique monomode 14 enroulée sur la bobine 12 est raccordée directement sur un premier dispositif 16 émetteur-récepteur optique. Ce dispositif comprend notamment une source laser et un photodétecteur à large bande. La source laser permet d'envoyer dans la fibre optique 14 un signal lumineux modulé en fréquence selon les mesures que l'on désire effectuer. Le photodétecteur à large bande reçoit les signaux lumineux sortant de la fibre optique 14, pour les transformer en signaux électriques qui peuvent notamment être envoyés dans un analyseur de réseaux selon des techniques connus, qui ne font pas partie de l'invention.

L'extrémité de la fibre optique monomode 14 qui se déroule de la bobin e 12 sort d'un boîtier 10 entourant la bobine 12 par un passage 18 ménagé selon l'axe de la bobine 12. La fibre 14 s'enroule ensuite sur un tambour 20 placé en face de l'ouverture 18 et dont l'axe est sensiblement perpendiculaire à celui de la bobine 12.

Le tambour 20 est monté sur le bâti (non représenté) du banc d'essai de façon à pouvoir tourner autour de son axe à grande vitesse. Sa rotation est commandée par un moteur 22.

La fibre optique monomode 14 ressort du tambour 20 selon son axe en un point A, pour être finalement raccordée par son extrémité, en un point B, sur un deuxième dispositif 24 émetteur-récepteur optique analogue au premier dispositif 16.

Etant donné que le tronçon de la fibre optique 14 qui sort du tambour 20 en A tourne avec le tambour alors que le tronçon de la fibre optique 14 qui est raccordé en B sur le dispositif 24 émetteur-récepteur optique reste fixe, un joint optique tournant 26 est interposé entre ces deux tronçons.

Conformément à l'invention, ce joint optique tournant 26 est constitué par une longueur de la fibre optique monomode 14 prévue entre le point de sortie A du tambour 20 et le point de raccordement B de la fibre 14 sur le deuxième dispositif 24 émetteur-récepteur optique. Cette longueur A.B de la fibre. optique monomode 14 est déterminée en fonction du nombre maximal de tours du mouvement de rotation relative réalisé au cours d'un essai entre le segment de la fibre lié en A au tambour 20 et le segment de la fibre lié en B au deuxième dispositif 24 émetteur-récepteur optique. Plus précisément, la longueur de la fibre optique 14 entre les points A et B, exprimée en mètres, est au moins égale à environ N/150, N étant le nombre maximal de tours du mouvement de rotation relative précitée.

Le respect de cette longueur minimale permet de limiter la torsion de la fibre optique à 150 tr/m au plus. On élimine ainsi tout risque de rupture de la fibre. En effet, des essais ont établi que cette rupture se produit entre 200 et 300 tr/m. Plus précisément, le nombre de tours par unité de longueur conduisant à la rupture de la fibre diminue lorsque la longueur A-B de la fibre 14 formant le joint optique tournant 26 augmente. Ainsi, pour des longueurs de 1 m et de 10 m, la rupture en torsion se produit lorsque le nombre de tours par unité de longueur atteint environ 300 tr/m, alors que la rupture se produit entre environ 200 tr/m et environ 250 tr/m pour des longueurs de fibres de 100 m.

A titre d'illustration nullement limitative, la limitation de la torsion de la fibre à 150 tr/m conduit à utiliser, pour former le joint optique tournant 26, 130 m de fibre optique monomode 14 dans le cas où la bobine de fibre à tester nécessite 19500 tours de tambour.

Comme on l'a illustré sur la figure unique, les tronçons de la fibre optique monomode 14 qui sont reliés par la longueur A-B de la fibre optique monomode 14, formant le joint optique tournant 26 sont de préférence sensiblement alignés et orientés selon une direction sensiblement horizontale. Ces tronçons peuvent toutefois être légèrement décalés l'un par rapport à l'autre tout en restant sensiblement parallèles. Ce dernier agencement est utilisé en particulier lorsque la longueur A-B de la fibre optique 14 formant le joint optique tournant 26 est au moins égale à environ 100 m. En effet, elle engendre des vibrations-dans la fibre optique 14 entre les points A et B, qui améliorent la répartition de la torsion sur toute la longueur. Un désalignement d'environ 1 cm des deux tronçons de fibre optique reliés par la longueur A-B de la fibre formant le joint optique tournant 26 est suffisant pour parvenir à ce résultat.

Il est à noter cependant que l'alignement ou le parallélisme des deux tronçons de fibre optique reliés par la longueur de fibre formant le joint optique tournant 26 ne constitue pas une contrainte essentielle à la réalisation de ce joint. En particulier, il peut exister entre ces deux tronçons un angle limité, pouvant atteindre notamment 10 à 20°.

Par ailleurs, la longueur de fibre optique monomode 14 joignant les points A et B pour former le joint optique tournant 26 doit être maintenue à l'écart de tout obstacle. A cet effet, une certaine tension est appliquée sur la fibre 14, entre ces deux points A et B, afin d'éviter que la fibre optique n'entre en contact avec le sol entre le tambour 20 et le deuxième dispositif 24 émetteur-récepteur optique. Toutefois, aucune tension précise n'est préconisée. En effet, les essais de rupture par torsion, déjà cités, ont été effectués à différentes tensions (par exemple de 0,5 N, 1 N et 2,3 N pour 1 m, 10 m, 15 m et 100 m de fibre) et n'ont pas révélé d'effet notable de la tension sur le nombre de tours par unité de longueur entraînant la rupture. Par ailleurs, l'absence de contact entre la fibre et le sol dépend à la fois de la longueur de la fibre entre les points A et B et de la distance entre cette fibre et le sol. On peut d'ailleurs observer que l'agencement du banc d'essai de telle sorte que la longueur A-B de fibre optique 14 formant le joint optique tournant 26 soit orientée verticalement, et non horizontalement, permettrait de réduire de façon très sensible la tension à appliquer.

Lorsqu'un essai est réalisé, le moteur 22 est actionné de façon à entraîner le tambour 20 en rotation à grande vitesse. La vitesse de rotation du tambour 20 est choisie de façon à simuler au mieux le déroulement de la fibre optique 14 hors de la bobine 12. Cette vitesse de rotation dépend par conséquent du diamètre du tambour 20. A titre d'illustration, une vitesse de 7 000 tr/min à 8000 tr/min permet d'assurer la simulation désirée.

Il est important d'observer qu'une telle vitesse peut être atteinte sans difficulté à l'aide du joint optique tournant 26 conforme à l'invention, en donnant à la longueur de la fibre optique monomode située entre les points A et B la valeur correspondant à la longueur de la bobine à dérouler et au diamètre du tambour 20 utilisé. Plus précisément, le joint optique tournant 26 ne fixe aucune limite à la vitesse de rotation possible du tambour 20. En d'autres termes, la vitesse de rotation de ce tambour n'est limitée que par les contraintes mécaniques liées à son entraînement.

Cette dernière caractéristique constitue un avantage essentiel du joint optique tournant 26 conforme à l'invention par rapport aux joints connus utilisant un couplage à lentilles, qui limitent la vitesse de rotation relative à environ 100 tr/min dans le cas des fibres optiques monomodes, qui est le seul à assurer une transmission d'informations sur une grande bande passante.

Par ailleurs, il est à noter que si le vrillage de la fibre optique monomode 14 sur la longueur A-B constituant le joint optique tournant réduit la bande passante par rapport à celle de la fibre non vrillée, cette bande passante reste très importante. En effet, on calcule aisément que pour 100 m de fibre vrillée, la bande passante est de 25 GHz au lieu de 200 GHz pour 100 m de fibre non vrillée. Etant donné que la longueur de fibre vrillée ne dépasse jamais quelques centaines de mètres, la bande passante du joint optique 26 conforme à l'invention n'entraîne aucune réduction sur la bande de longueurs d'onde comprise entre 0 et 500 MHz. Ces caractéristiques sont largement supérieures à celles des joints optiques tournants traditionnels à transmission unidirectionnelle ainsi qu'à celles des joints optiques tournants à couplage par lentilles lorsque ces joints utilisent des fibres optiques multimodes pour augmenter la vitesse de rotation relative maximale possible.

Des essais ont également été effectués afin de mesurer l'atténuation optique induite par le joint optique tournant 26 conforme à l'invention lorsque la longueur de fibre optique monomode 14 entre les points A et B est vrillée. Ainsi, des essais de vrillage d'une longueur de 100 m de fibre optique monomode à 150 tr/m et à 200 tr/m ont montré que l'atténuation optique est de l'ordre de 0,5 décibel, dans toute la bande passante comprise entre 0 et 500 MHz. L'atténuation optique induite par torsion est donc très acceptable et permet de conserver dans de bonnes conditions les paramètres de transmission entre les deux dispositifs 16 et 24 émetteur-récepteur optique.

L'utilisation d'un joint optique tournant 26 constitué par une longueur de fibre optique monomode reliant directement les deux tronçons de fibre optique monomode animés d'un mouvement de rotation relative assure donc une transmission bidirectionnelle des informations avec une grande bande passante, en autorisant une vitesse de rotation relative élevée, tout en conservant les paramètres de transmission et en présentant une très bonne tenue mécanique.

Dans le cas particulier où un tel joint optique est utilisé sur un banc d'essai permettant d'effectuer le déroulement d'une bobine de fibre optique, il devient possible d'effectuer des opérations qui n'étaient pas réalisables jusqu'à présent. Ainsi et uniquement à titre d'exemple, il devient possible de mesurer le taux d'erreur pour valider le fonctionnement de la transmission optique. Il devient également possible de réaliser des couplages avec le poste de contrôle de l'engin destiné à être équipé de la bobine de fibre optique, pour valider le système en étudiant l'influence des pertes de transmission.

## Revendications

1. Procédé de transmission bidirectionnelle d'informations entre deux tronçons de fibre optique monomode (14). ayant un mouvement de rotation relative, comprenant les étapes suivantes :
a) déterminer le nombre maximal de tours N non nul de mouvement de rotation relative entre les deux tronçons de fibre optique monomode,
b) relier directement lesdits tronçons de fibre optique monomode par un joint optique tournant (26) comprenant une longueur (AB) de fibre optique monomode (14), la longueur (AB), exprimée en mètres, étant au moins égale à N/150,
c) initier la rotation des deux tronçons de fibre optique monomode et transmettre les informations entre lesdits tronçons.

2. Procédé selon la revendication 1, dans lequel, lorsque ladite longueur (AB) de fibre optique monomode (14) est inférieure à environ 100 m, les deux tronçons de fibre optique monomode (14) présentent des axes sensiblement confondus.

3. Procédé selon la revendication 1, dans lequel, lorsque ladite longueur (AB) de fibre optique monomode (14) est au moins égale à environ 100 m, les deux tronçons de fibre optique monomode (14) présentent des axes sensiblement parallèles et décalés l'un par rapport à l'autre.

4. Procédé selon l'une quelconque des revendications 1 à 3, dans lequel ladite longueur (AB) de fibre optique monomode (14) est sous tension.

5. Procédé selon l'une quelconque des revendications précédentes, dans lequel ladite longueur (AB) de fibre optique monomode est sensiblement horizontale.

6. Procédé selon l'une quelconque des revendications précédentes, dans lequel le joint (26) est placé dans un banc d'essai apte à réaliser un déroulement rapide d'une fibre optique bobinée (14), entre un tronçon de fibre enroulé sur un tambour (20) animé d'un mouvement de rotation rapide autour de son axe et un tronçon de fibre relié à un dispositif statique (24) émetteur-récepteur optique.

## Patentansprüche

1. Verfahren zur bidirektionalen Informationsübertragung zwischen zwei Monomode-Lichtwellenleiterabschnitten (14), die sich in einer relativen Drehbewegung befinden, das die folgenden Schritte umfaßt:
a) Bestimmen der maximalen Anzahl von Umdrehungen N ungleich Null der relativen Drehbewegung zwischen den beiden Monomode-Lichtwellenleiterabschnitten,
b) Direktes Verbinden der beiden Monomode-Lichtwellenleiterabschnitte durch eine drehbare optische Verbindung (26), die einen Monomode-Lichtwellenleiter (14) der Länge (AB) umfaßt, wobei die in Metern angegebene Länge (AB) mindestens gleich N/150 ist,
c) Einleiten der Drehung der beiden Monomode-Lichtwellenleiterabschnitte, und Übertragen der Informationen zwischen den beiden Abschnitten.

2. Verfahren nach Anspruch 1, bei dem die Achsen der beiden Monomode-Lichtwellenleiterabschnitte (14), wenn die Länge (AB) kleiner als ca. 100 m ist, ungefähr ineinanderlaufen.

3. Verfahren nach Anspruch 1, bei dem die Achsen der beiden Monomode-Lichtwellenleiterabschnitte (14) ungefähr parallel, und versetzt zueinander sind, wenn die Länge (AB) mindestens gleich ca. 100 m ist.

4. Verfahren nach einem der Ansprüche 1 bis 3, bei dem die Länge (AB) des Monomode-Lichtwellenleiters (14) unter Spannung steht.

5. Verfahren nach einem der vorstehenden Ansprüche, bei dem die Länge (AB) des Monomode-Lichtwellenleiters ungefähr horizontal verläuft.

6. Verfahren nach einem der vorstehenden Ansprüche, bei dem die Verbindung (26) in einen Prüfstand eingesetzt wird, mit dem ein aufgespulter Lichtwellenleiter (14) schnell abgerollt werden kann, und zwar zwischen einem Faserabschnitt, der auf einer Trommel (20) aufgerollt ist, die sich in einer schnellen Drehbewegung um ihre Achse befindet, und einem Faserabschnitt, der mit einer statischen Lichtwellen-Sender-Empfänger-Vorrichtung (24) verbunden ist.

## Claims

1. Method for the bi-directional transmission of information between two single mode optical fibre sections (14) having a relative rotary movement and comprising the following stages:
a) determining the maximum number of N non-zero turns of relative rotary movement between the two single mode optical fibre sections,
b) directly linking said single mode optical fibre sections by a rotating optical joint (26) comprising a single mode optical fibre length (AB) which, expressed in metres, is at least equal to N/1,
c) initiating the rotation of the two single mode optical fibre sections (14) and transmitting the information between said sections.

2. Method according to claim 1, wherein, when said single mode optical fibre (14) length (AB) is less than approximately 100 m, the two single mode optical fibre sections (14) have essentially coinciding axes.

3. Method according to claim 1, wherein, when said single mode optical fibre (14) length (AB) is at least equal to approximately 100 m, the two single mode optical fibre (14) sections have substantially parallel axes displaced with respect to one another.

4. Method according to any one of the claims 1 to 3, wherein said single mode optical fibre (14) length (AB) is under tension.

5. Method according to any one of the preceding claims, wherein said single mode optical fibre length (AB) is substantially horizontal.

6. Method according to any one of the preceding claims, wherein the joint (26) is placed in a test bench able to produce a rapid unwinding of a wound optical fibre (14), between a fibre section wound onto a drum (20) effecting a rapid rotary movement about its axis and a fibre section connected to a static, optical transceiver device (24).
